# EUROPEAN PATENT APPLICATION

(11) **EP 2 720 181 A2**
(43) Date of publication of application: **16.04.2014**
(21) Application number: 13188265.6
(22) Date of filing: 11.10.2013
(51) Int. Cl.: G06Q 30/00, G06Q 10/10

(54) **Terminal and method for providing an electronic letter paper download service**

(30) Priority: 12.10.2012 KR 20120113590
(71) Applicant: Samsung Electronics Co., Ltd, Gyeonggi-do 443-742 (KR)
(72) Inventor: Jung, Ji-Eun, 443-742 Gyeonggi-do (KR); Cho, Hey-Rin, 443-742 Gyeonggi-do (KR)
(74) Representative: Gover, Richard Paul

(57) **Abstract**

A terminal for providing an electronic letter paper download service. The terminal includes a controller arranged to register a new letter paper as an available letter paper if a download of the new letter paper is selected and completed, and arranged to display letter contents of a new letter on a downloaded letter paper for the new letter when a download of the new letter paper completed. A corresponding method is also disclosed.

## Description

### BACKGROUND OF THE INVENTION

### Field of the Invention:

The present invention relates to a terminal and method for providing an electronic letter paper download service. More particularly, the present invention relates to a terminal and method for providing an electronic letter paper download service, capable of allowing an electronic letter application to download and provide a wide variety of electronic letter papers.

### Description of the Related Art:

An electronic letter application provides analog-sensitive letters, which include a variety of multimedia data and handwriting data. An "analog-sensitive" letter means that when the user writes the letter through an electronic letter application in the terminal, the user's experience is similar to that of writing a physical letter. If an electronic letter application is installed in a terminal, a user of the terminal may enter a text in an electronic letter paper as letter content, attach the electronic letter as multimedia data, and send the electronic letter to other terminals in which the same electronic letter application is installed. The terminal may also receive similar electronic letters from other terminals, which include a variety of multimedia data and handwriting data.

According to the related art, electronic letter applications provide only their own default letter paper to the user. Therefore, in sending and receiving electronic letters, the user may only use the default letter papers provided by the electronic letter application.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of certain embodiments of the present invention to provide an apparatus and method for providing an electronic letter paper download service in a terminal, capable of allowing an electronic letter application to download and provide a wide variety of electronic letter papers.

In accordance with a first aspect of the present invention, a terminal for providing an electronic letter paper download service is provided. The terminal includes a controller arranged to register a new letter paper as an available letter paper if download of the new letter paper is selected and completed, and arranged to display letter contents of a new letter on the new letter paper for the new letter if download for the letter paper of the new letter is selected and completed.

In accordance with a second aspect of the present invention, a method for providing an electronic letter paper download service in a terminal is provided. The method includes, if download of a new letter paper is selected and completed, registering the new letter paper as an available letter paper, and displaying letter contents of a new letter on the letter paper for the new letter if download of the letter paper of the new letter is selected and completed.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a system providing an electronic letter paper download service according to an exemplary embodiment of the present invention;
FIG. 2 illustrates a structure of a terminal according to exemplary embodiment of the present invention;
FIG. 3 illustrates a process of downloading an electronic letter paper and updating an electronic letter paper in a terminal according to a first exemplary embodiment of the present invention;
FIG. 4 illustrates a process of downloading an electronic letter paper in a terminal according to a second exemplary embodiment of the present invention;
FIG. 5 illustrates a process of downloading an electronic letter paper in a terminal according to a third exemplary embodiment of the present invention;
FIGS. 6A to 6C illustrate a screen for a description of a process of downloading an electronic letter paper and updating an electronic letter paper in a terminal according to the first exemplary embodiment of the present invention;
FIGS. 7A to 7E illustrate a screen for a description of a process of downloading an electronic letter paper in a terminal according to the second exemplary embodiment of the present invention; and
FIGS. 8A and 8B illustrate an operation of displaying a received new letter according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding, but these are to be regarded as merely exemplary. Accordingly, those of ordinary skill in the art will recognize that various changes and modifications of the embodiments described herein can be made without departing from the scope of the invention as defined by the appended claims. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

A terminal, to which exemplary embodiments of the present invention are applicable, may include a mobile terminal and a fixed terminal. A mobile terminal may be an easy-to-carry mobile electronic device, and may include a video phone, a cellular phone, a smart phone, an International Mobile Telecommunication 2000 (IMT-2000) terminal, a Wideband Code Division Multiple Access (CDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an E-Book reader, a portable computer (for example, a laptop computer, a tablet computer, and the like), a digital camera and the like. The fixed terminal may include a desktop Personal Computer (PC) and the like.

According to various exemplary embodiments of the invention, "electronic letter paper" or simply "letter paper" differs from the letter paper used for writing a physical letter, and it represents the letter paper for writing the electronic letter which can be received/transmitted between the terminals through the server.

In certain embodiments of the invention an electronic letter may be exchanged between terminals, and as such the electronic letter may be considered to be a message or document. In particular, the electronic letter may include various multimedia content items. Similar, in certain embodiments of the invention an electronic letter paper may be considered to be a template, message template or document template. Certain embodiments of the invention, described below, make reference to a letter box. This may alternatively be considered to be a preview mode or message view mode.

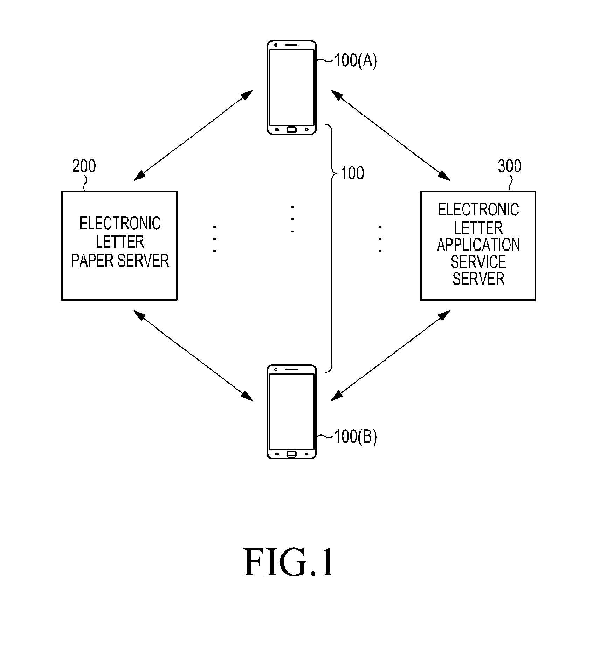

FIG. 1 illustrates a system providing an electronic letter paper download service according to an exemplary embodiment of the present invention.

Referring to FIG. 1, the system includes terminals 100 (including terminal 100(A) and terminal 100(B)), an electronic letter paper server 200, and an electronic letter application service server 300. It will be appreciated that in some embodiments the functions of the electronic letter paper server 200 and the electronic letter application service server 300 may be implemented by a single server.

The terminals 100, which store and operate an electronic letter application, may indicate the presence of a new letter paper(s) received from the electronic letter paper server 200, and may download the new letter paper and register it in a letter paper list as an available letter paper.

The terminals 100 may indicate the presence of a letter paper that is received from the electronic letter paper server 200 and needing to be updated, and may update the letter paper needing to be updated among the letter papers registered in the letter paper list.

If a letter paper of a new letter received in a 'View Letter' (i.e., a letter box) of an electronic letter application mode is not a letter paper registered in the letter paper list, the terminal 100 downloads the letter paper of the new letter and displays the contents of the new letter on the downloaded letter paper.

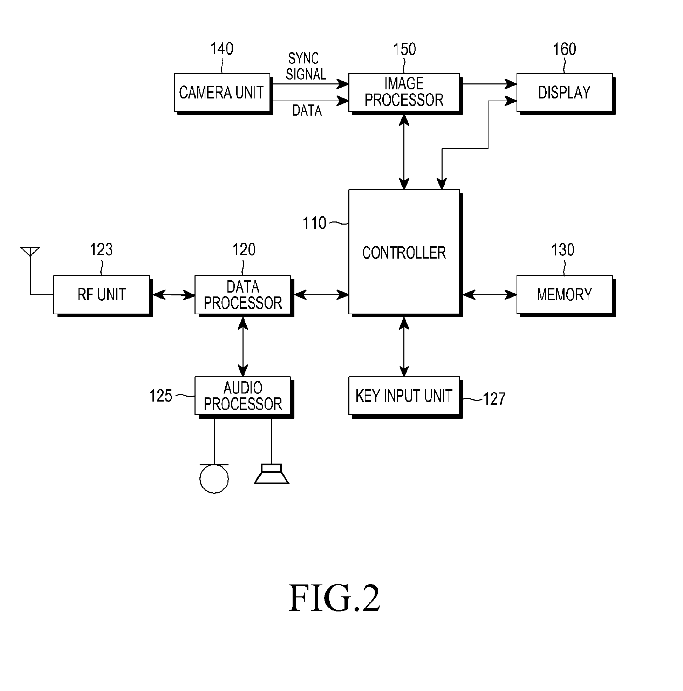

A structure of the terminals 100 is described below with reference to FIG. 2.

The electronic letter paper server 200 registers the electronic letter papers, which are designed and developed by Content Providers (CPs), and transmits new letter paper information to the terminals 100 each time a new electronic letter paper is registered. The electronic letter paper server 200 may also store the electronic letter papers, or may facilitate the terminals to directly download the electronic letter papers directly from the CPs. The new letter paper information includes a default thumbnail image of the letter paper, a letter paper's name, and Universal Resource Locator (URL) information specifying a location where the letter paper may be downloaded.

Upon receiving URL information specifying a location where the new letter paper may be downloaded from the terminal 100, and after transmitting the new letter paper information to the terminal 100, the electronic letter paper server 200 transmits the electronic letter paper stored in the location specified by the URL to the terminal 100 in the form of an Application Package file (APK). The request for the letter paper may include the URL information. As the electronic letter paper is transmitted as an APK file, the electronic letter paper server 200 may provide high-quality multimedia letter papers that include animations in addition to static images.

If an existing electronic letter paper is updated, the electronic letter paper server 200 transmits updated letter paper information to the terminal 100. The updated letter paper information including a letter paper's name and URL information based on which the letter paper may be updated.

Upon receiving a request to download an updated electronic letter paper including the URL information from the terminal 100, the electronic letter paper server 200 transmits update information stored in the location specified by the URL to the terminal 100.

The electronic letter application service server 300 provides a service in which terminals storing an electronic letter application may exchange letters with each other.

Upon receiving from a sending terminal 100(A) first new letter information including letter paper information, sender information and letter content information (text and multimedia data), the electronic letter application service server 300 transmits second new letter information to a receiving terminal 100(B). The second new letter information includes letter paper information, sender information, and URL information specifying a location where the letter contents are stored. The second new letter information may further include type information of multimedia data included in the letter contents.

Upon receiving a request including URL information from the receiving terminal 100(B), after transmitting the second new letter information to the receiving terminal 100B, the electronic letter application service server 300 may transmit the letter contents (text and multimedia data) stored in the location specified by the URL to the receiving terminal 100B.

Upon receiving a request including URL information and a request for only some (for example, text) of the letter contents from the receiving terminal 100B, after transmitting the second new letter information to the receiving terminal 100B, the electronic letter application service server 300 may transmit only the text included in the letter contents stored in the location specified by the URL, to the receiving terminal 100B. Thereafter, upon receiving information about the URL where the letter contents are stored from the receiving terminal 100B, the electronic letter application service server 300 may transmit the letter contents stored in the location specified by the URL, to the receiving terminal 100B.

FIG. 2 illustrates a structure of a terminal according to exemplary embodiment of the present invention.

Referring to FIG. 2, a Radio Frequency (RF) unit 123 is responsible for wireless communication. The RF unit 123 includes an RF transmitter for up-converting a frequency of transmission signals and amplifying the up-converted transmission signals, and an RF receiver for low-noise-amplifying received signals and down-converting a frequency of the low-noise-amplified received signals. A data processor 120 includes a transmitter for coding and modulating the transmission signals, and a receiver for demodulating and decoding the received signals. The data processor 120 may include a modulator/demodulator (modem) and a coder/decoder (codec). The codec includes a data codec for processing packet data and the like, and an audio codec for processing audio signals such as voice. An audio processor 125 plays received audio signals output from the audio codec in the data processor 120, using a speaker SPK, and transfers transmission audio signals picked up by a microphone MIC to the audio codec in the data processor 120.

A key input unit 127 includes character/numeric keys for entering character/numeric information, and function keys for setting various functions.

A memory 130 may include a program memory and a data memory. The program memory may store programs for controlling the overall operation of the terminal. According to exemplary embodiment of the present invention, the program memory may store control programs for displaying and downloading a new letter paper which is not registered in a letter paper list, in an electronic letter application mode, indicating reception of a new letter written on a letter paper which is not registered in the letter paper list, and downloading the letter paper of the new letter. The data memory temporarily stores the data generated during execution of the programs. The memory 130 stores a plurality of letter papers to be used in the electronic letter application.

A controller 110 controls the overall operation of the terminal. According to exemplary embodiment of the present invention, the controller 110 displays a non-registered new letter paper as a default image in 'View Letter Paper'. If 'Download' for the new letter paper is selected and the download is completed, the controller 110 registers the downloaded new letter paper as an available letter paper. If 'Download' for a letter paper of a received new letter is selected and the download is completed when the letter paper of the new letter is not a registered letter paper in 'View Received Letter', the controller 110 displays the letter contents of the new letter on the downloaded letter paper of the new letter.

If a letter paper list is selected by a 'View Letter Paper' function in the electronic letter application mode, the controller 110 determines whether new letter paper information (to be specific, information about a new letter paper) is received from the electronic letter paper server 200. If the new letter paper information is received, the controller 110 displays the new letter paper as a default thumbnail image including a 'Download' software button. If the 'Download' software button is selected, the controller 110 downloads the new letter paper from the electronic letter paper server 200, and registers the new letter paper in the letter paper list as an available letter paper.

If the letter paper list is selected in the electronic letter application mode, the controller 110 determines whether updated letter paper information is received from the electronic letter paper server 200. If the updated letter paper information is received, the controller 110 displays the letter paper needed to be updated among the letter papers registered in the letter paper list as a default thumbnail image including an 'Update' software button. If the 'Update' software button is selected, the controller 110 receives update information for the letter paper from the electronic letter paper server 200 and performs update on letter paper.

If new letter information (e.g., information about a new letter) is received from the electronic letter application service server 300 when a letter box is selected by a 'View Letter' function in the electronic letter application mode, the controller 110 displays an indicator indicating a new letter in a default thumbnail image for a letter paper of the new letter. If a letter paper of the new letter is not a letter paper registered in the letter paper list when the new letter is selected, the controller 110 downloads the letter paper of the new letter upon receiving a download request from the user. The controller 110 downloads the letter contents of the new letter from the electronic letter application service server 300 and displays the downloaded letter contents on the downloaded letter paper of the new letter.

If the download for the letter paper of the new letter is completed, the controller 110 registers the letter paper of the new letter in the letter paper list as an available letter paper.

If new letter information is received from the electronic letter application service server 300 when the letter box is selected in the electronic letter application mode, the controller 110 displays an indicator indicating the presence of a new letter in a default thumbnail image for a letter paper of the new letter. If the letter paper of the new letter is not a letter paper registered in the letter paper list when the new letter is selected, the controller 110 downloads and displays only some of the letter contents of the new letter from the electronic letter application service server 300 upon a preview request. The displayed letter contents of the new letter may be text.

If 'Download' for the new letter paper is selected while displaying only some of the letter contents of the new letter upon a preview request, the controller 110 downloads the letter paper of the new letter. The controller 110 downloads all letter contents of the new letter from the electronic letter application service server 300 and displays the letter contents of the new letter on the downloaded letter paper of the new letter.

If the download for the letter paper of the new letter is completed, the controller 110 registers the downloaded letter paper of the new letter in the letter paper list as an available letter paper.

If a new letter is received when the letter box is selected in the electronic letter application mode, the controller 110 displays an indicator indicating a new letter in a default thumbnail image for a letter paper of the new letter, and displays an indicator indicating that the letter paper of the new letter is not a letter paper registered in the letter paper list.

If new letter information is received from the electronic letter application service server 300 when the letter box is selected in the electronic letter application mode, the controller 110 displays an indicator indicating a new letter in a default thumbnail image for a letter paper of the new letter, and displays an indicator indicating a type of multimedia included in the new letter.

A camera unit 140 includes a camera sensor for capturing image data and converting the captured optical image signals into electrical image signals, and a signal processor for converting analog image signals captured by the camera sensor into digital image data. The camera sensor may be a Charge-Coupled Device (CCD) or Complementary Metal-Oxide Semiconductor (CMOS) sensor, and the signal processor may be implemented with a Digital Signal Processor (DSP). The camera sensor and the signal processor may be implemented integrally or separately.

An image processor 150 performs Image Signal Processing (ISP) to display the image signals output from the camera unit 140 on a display 160. The ISP includes functions such as gamma correction, interpolation, spatial variation, image effects, image scaling, Auto White Balance (AWB), Auto Exposure (AE), Auto Focus (AF) and the like. The image processor 150 processes the image signals output from the camera unit 140 on a frame basis, and outputs frame image data according to the characteristics and size of the display 160. The image processor 150, which includes a video codec, compresses the frame image data displayed on the display 160 and decompresses (or restores) the compressed frame image data to its original frame image data, using a set coding scheme. The video codec may be a Joint Photographic Experts Group (JPEG) codec, a Moving Picture Experts Group 4 (MPEG4) codec, a Wavelet codec, or the like. The image processor 150 may have an On Screen Display (OSD) function, and may output OSD data depending on the size of the displayed screen under control of the controller 110.

The display 160 displays the image signals output from the image processor 150 and the user data output from the controller 110. The display 160 may be implemented with Liquid Crystal Display (LCD). In this case, the display 160 may include an LCD controller, a memory for storing image data, and an LCD panel. When implemented in a touch screen fashion, the LCD panel may serve as an input unit, and the same keys as those of the key input unit 127 may be displayed on the display 160.

If the display 160 is used as a touch screen unit, the display 160 may include a touch screen unit having a Touch Screen Panel (TSP) including a plurality of sensor panels. The sensor panels may include a capacitive sensor panel capable of detecting touches by a fingertip and an electromagnetic induction sensor panel capable of detecting touches by a touch pen such as a stylus.

In a letter paper list of the electronic letter application mode, the display 160 displays a non-registered new letter paper as a default thumbnail image including a 'Download' software button. In a letter paper list of the electronic letter application mode, the display 160 displays a letter paper needing to be updated as a default thumbnail image including a 'Update' software button. In a letter box of the electronic letter application mode, the display 160 indicates reception of a new letter written on a letter paper which is not registered in the letter paper list, with a default thumbnail image of the new letter, and displays letter contents of the new letter on the downloaded letter paper of the new letter.

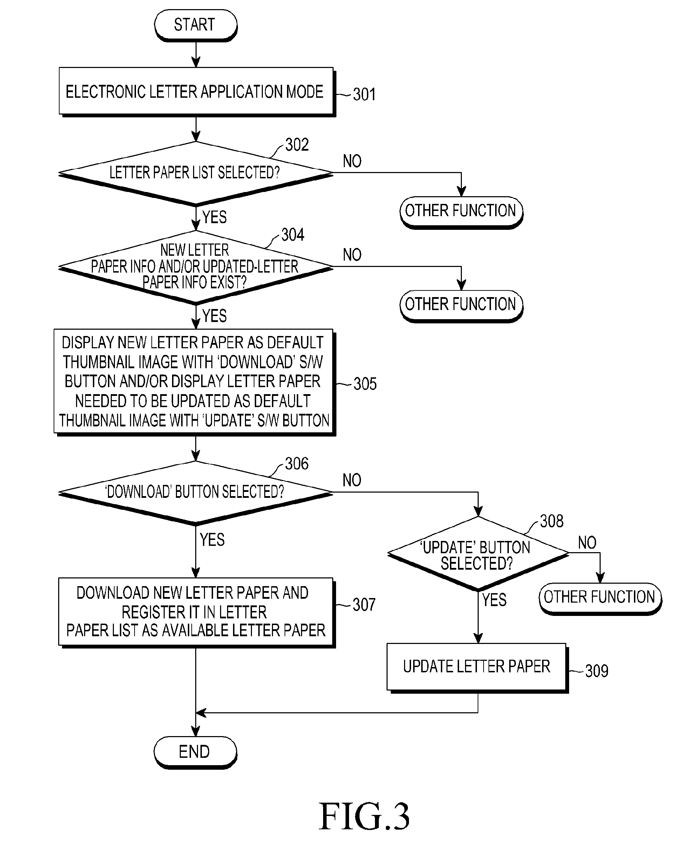

An operation of providing an electronic letter paper download service in the above-described terminal is described below with reference to FIGS. 3 to 8B.

FIG. 3 illustrates a process of downloading a letter paper and updating a letter paper in a terminal according to a first exemplary embodiment of the present invention. The first exemplary embodiment of the present invention is described below with reference to FIGS. 1, 2 and 3.

Referring to FIG. 3, in step 301, the controller 110 switches to an electronic letter application mode, if an electronic letter application is selected or activated by the user in the terminal.

The controller 110 determines in step 302 whether a letter paper list is selected in the electronic letter application mode. If the letter paper list is selected, the controller 110 determines in step 304 whether new letter paper information or updated-letter paper information has been received from the electronic letter paper server 200. New letter paper information includes a default thumbnail image of a letter paper, a letter paper's name, and URL information based on which a letter paper may be downloaded. Updated-letter paper information includes a letter paper's name, and URL information based on which a letter paper may be updated.

The controller 110 determines in step 304 whether new letter paper information and/or the updated letter paper information is present. If new letter paper information and/or the updated-letter paper information is present, then in step 305 the controller 110 displays, in the letter paper list, new letter paper as a default thumbnail image including a 'Download' software button, and displays letter paper needing to be updated, as a default thumbnail image including an 'Update' software button.

In step 305, based on the received new letter paper information, the controller 110 displays the new letter paper as a default thumbnail image including a 'Download' software button, thereby allowing the user to determine that the letter paper displayed as the default thumbnail image is a new (e.g., unregistered) letter paper which needs to be downloaded. However, the controller 110 may display in the default thumbnail image not only the 'Download' software button but also an indicator such as an icon, thereby indicating that the default thumbnail image is a new letter paper that needs to be downloaded.

In step 305, based on the received updated letter paper information, the controller 110 displays the letter paper needing to be updated among the letter papers registered in the letter paper list, as a default thumbnail image including an 'Update' software button, thereby allowing the user to determine that the letter paper displayed as the default thumbnail image is a letter paper that needs to be updated. However, the controller 110 may display in the default thumbnail image not only the 'Update' software button but also an indicator such as an icon indicating that the default thumbnail image is a letter paper that needs to be updated.

The controller 110 determines in step 306 whether the 'Download' software button is selected to download the new letter paper. If the 'Download' software button is selected, the controller 110 transmits URL information specifying a location where the letter paper may be downloaded, in the received new letter paper information, to the electronic letter paper server 200, to download the new letter paper from the electronic letter paper server 200 and register the downloaded new letter paper in the letter paper list as an available letter paper in step 307. The electronic letter paper server 200 may retrieve the new letter paper from the location specified in the URL. The downloaded new letter paper may need to undergo an installation process after being downloaded, as the new letter paper may be provided as an APK file. When the installation process is completed, the new letter paper is registered in the letter paper list, and may be used to send and receive a letter.

If the 'Download' software button is not selected in step 306, the controller 110 determines in step 308 whether the 'Update' software button is selected to perform update on the letter paper. If the 'Update' software button is selected, the controller 110 sends a request for URL information specifying a location where update information of the letter paper may be downloaded, in the received updated-letter paper information, to the electronic letter paper server 200. The controller 110 updates the letter paper in step 309 based on the update information received from the electronic letter paper server 200.

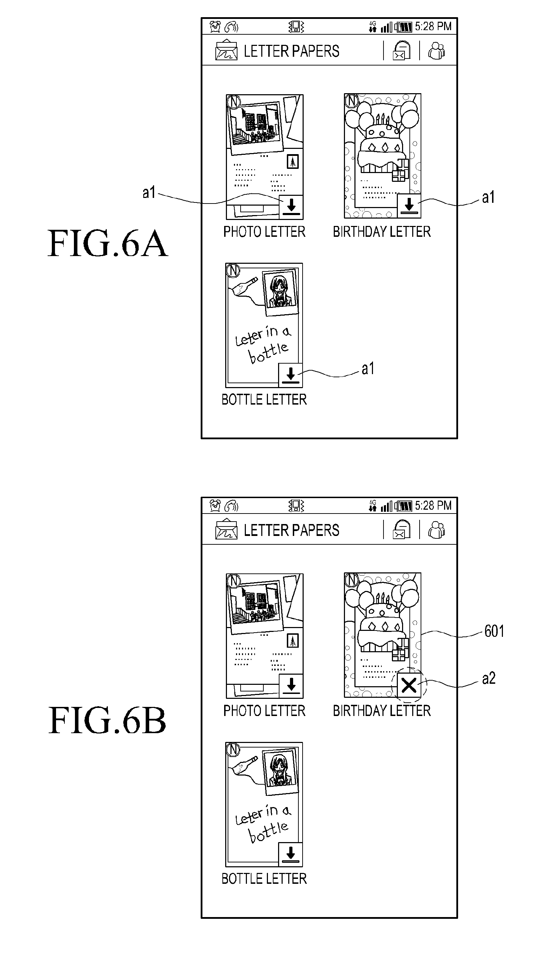

FIGS. 6A to 6C illustrate a screen for a description of a process of downloading a letter paper and updating a letter paper in a terminal according to a first exemplary embodiment of the present invention. The process of FIG. 3 will be described below with reference to FIGS. 6A to 6C.

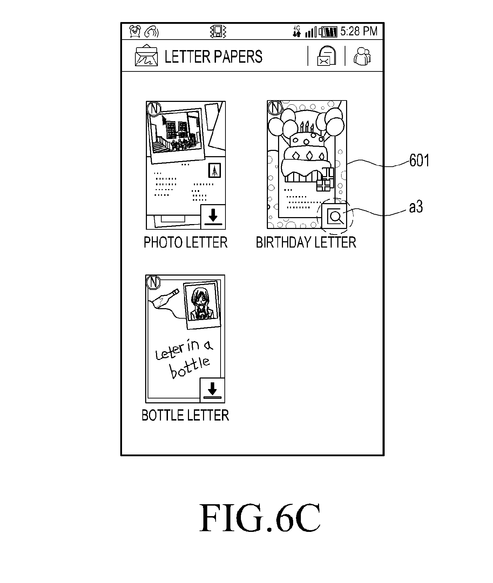

Referring to FIG. 6A, if a letter paper list is selected in the electronic letter application mode, the controller 110 displays a plurality of non-registered new letter papers as default thumbnail images including a 'Download' software button al. As illustrated in FIG. 6B, if a 'Download' software button a1 of a new letter paper 601 is selected, the controller 110 displays an indicator a2 indicating the download in a position where the 'Download' software button a1 is located. As illustrated in FIG. 6C, when the download of the new letter paper 601 is completed, the controller 110 may display, in a position of the indicator a2 indicating the download, a 'Preview' software button a3 for allowing the user to preview the new letter paper 601 that is registered in the letter paper list after the download is completed. After the download for the new letter paper 601 is completed as illustrated in FIG. 6C, the new letter paper 601 may be reordered to be prioritized over the other non-downloaded new letter papers.

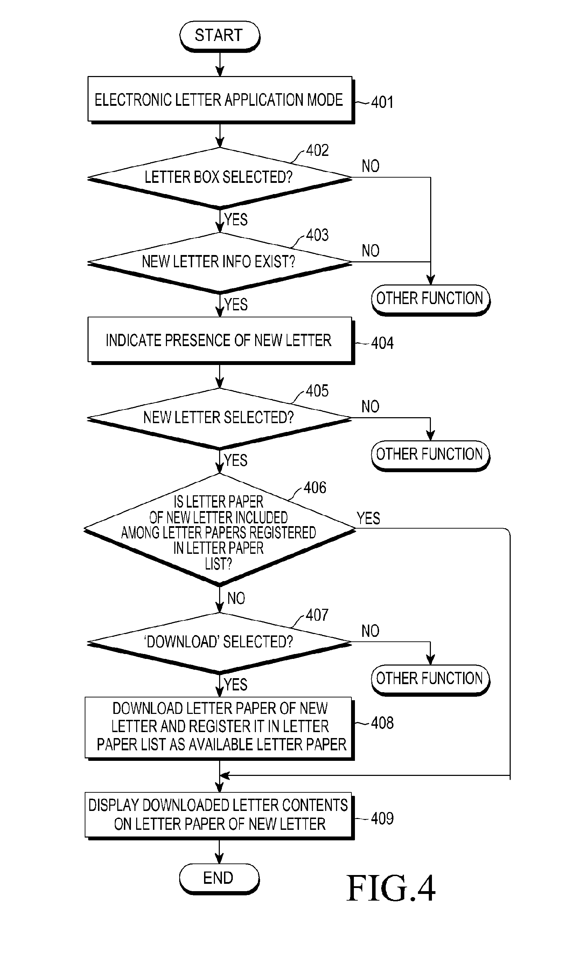

FIG. 4 illustrates a process of downloading a letter paper in a terminal according to a second exemplary embodiment of the present invention. The second exemplary embodiment of the present invention is described below with reference to FIGS. 1, 2 and 4.

Referring to FIG. 4, in step 401, the controller 110 switches to an electronic letter application mode, if an electronic letter application is selected or activated by the user in the terminal.

The controller 110 determines in step 402 whether a letter box is selected in the electronic letter application mode. If the letter box is selected, the controller 110 determines in step 403 whether new letter information is received from the electronic letter application service server 300. The new letter information includes letter paper information (for example, letter paper's name or default thumbnail image), sender information, and URL information based on which letter contents may be downloaded.

If the new letter information is received, the controller 110 indicates the presence of the received new letter on the display 160 in step 404. Indicating the presence of the new letter may include displaying a specific indicator indicating a new letter in a default thumbnail image 701 for a letter paper of the new letter.

The controller 110 determines in step 405 whether the new letter is selected. If the new letter is selected, the controller 110 determines in step 406 whether a letter paper of the new letter is included among the letter papers registered in the letter paper list.

If the letter paper of the new letter is not included among the letter papers registered in the letter paper list, the controller 110 notifies the user that the letter paper of the selected new letter is not a downloaded letter paper, and provides a button for allowing the user to perform download.

The controller 110 determines in step 407 whether 'Download' is selected by the user. If 'Download' is selected by the user, the controller 110 transmits URL information specifying a location where a letter paper of the new letter may be downloaded, to the electronic letter paper server 200. In step 408, the controller 110 downloads a letter paper of the new letter from the electronic letter paper server 200 and registers the downloaded letter paper of the new letter in the letter paper list as an available letter paper.

Since the new letter information for the letter paper of the new letter has been received from the electronic letter paper server 200, the controller 110 may search for a letter paper corresponding to the letter paper of the new letter among the non-downloaded new letter papers, and transmit URL information specifying a location where the letter paper of the new letter may be downloaded, to the electronic letter paper server 200.

The downloaded new letter paper may need undergo an installation process after being downloaded, since as the new letter paper may be provided as an APK file. When the installation process is completed, the new letter paper is registered in the letter paper list, and may be used to send and receive a letter.

If the download for the letter paper of the received new letter is completed, the controller 110 transmits URL information specifying a location where the letter contents may be downloaded, in the received new letter information, to the electronic letter application service server 300. The controller 110 downloads the letter contents of the new letter from the electronic letter application service server 300 and displays or outputs the downloaded letter contents (multimedia data including text, photo, voice file and music file) on the letter paper of the new letter in step 409. The electronic letter application service server 300 may retrieve the letter contents from the location specified in the URL.

It is assumed in FIG. 4 that a letter paper of a new letter received in a letter box of the electronic letter application mode is downloaded. However, if a new letter is received in a standby mode while performing another application, the controller 110 may indicate the reception of the new letter with a specific icon in a predetermined area (for example, a display area of an indicator indicating a battery level, a received signal strength, and the like) of the display 160. Accordingly, if the specific icon indicating the reception of the new letter is selected, the controller 110 may switch to the electronic letter application mode and perform steps 406 to 409.

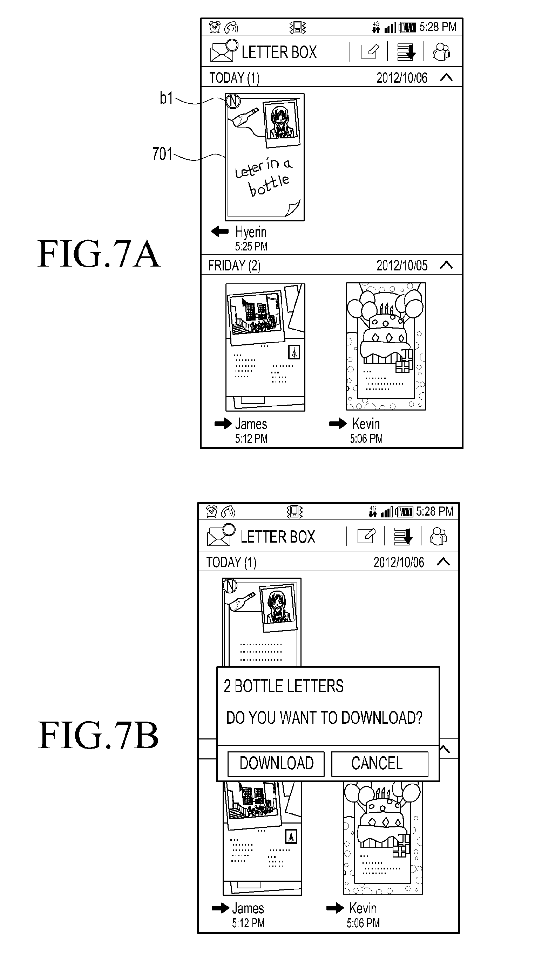

FIGS. 7A to 7E illustrate a screen for a description of a process of downloading a letter paper in a terminal according to a second exemplary embodiment of the present invention. The process of FIG. 4 is described below with reference to FIGS. 7A to 7E.

Referring to FIG. 7A, in a letter box of the electronic letter application mode, the controller 110 indicates the presence of a received new letter by displaying an indicator b 1 indicating a new letter in a default thumbnail image 701 of a letter paper.

If the letter paper of the new letter is not a letter paper existing in the letter paper list when the default thumbnail image 701 for the letter paper of the new letter is selected in FIG. 7A, the controller 110 notifies the user that the selected letter paper of the new letter is not a downloaded letter paper, and provides a 'Download' button for allowing the user to perform download, as illustrated in FIG. 7B.

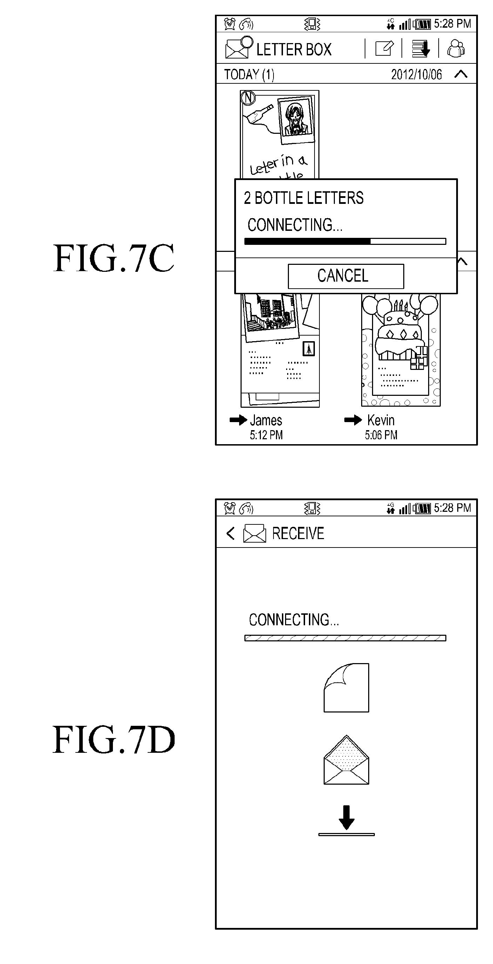

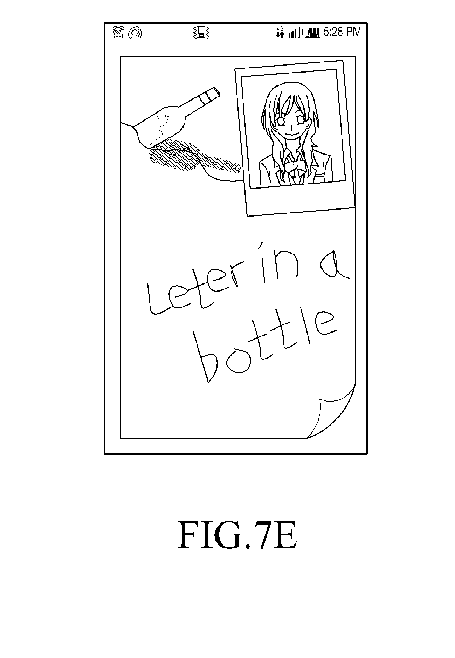

If 'Download' is selected, the controller 110, as illustrated in FIG. 7C, indicates the letter paper of the new letter is being downloaded from the electronic letter paper server 200. When the download is completed, the controller 110, as illustrated in FIG. 7D, downloads the letter contents of the new letter from the electronic letter application service server 300. Thereafter, as illustrated in FIG. 7E, the controller 110 displays the downloaded letter contents of the new letter on the downloaded letter paper of the new letter.

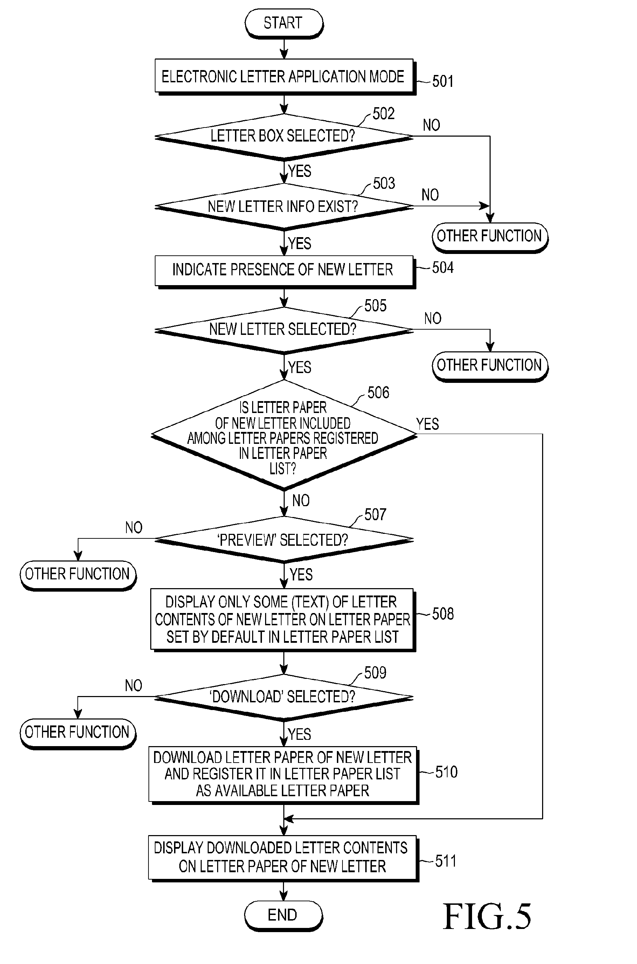

FIG. 5 illustrates a process of downloading a letter paper in a terminal according to a third exemplary embodiment of the present invention. The third exemplary embodiment of the present invention is described below with reference to FIGS. 1, 2 and 5.

Referring to FIG. 5, in step 501, the controller 110 switches to an electronic letter application mode, if an electronic letter application is selected or activated by the user in the terminal.

The controller 110 determines in step 502 whether a letter box is selected in the electronic letter application mode. If the letter box is selected, the controller 110 determines in step 503 whether new letter information is received from the electronic letter application service server 300. The new letter information includes letter paper information (for example, letter paper's name or default thumbnail image), sender information, and URL information specifying a location where letter content may be downloaded.

If the new letter information is received, the controller 110 indicates the presence of the received new letter on the display 160 in step 504. Indicating the presence of the new letter may include displaying a specific indicator indicating a new letter in the default thumbnail image 701 for a letter paper of the new letter.

The controller 110 determines in step 505 whether the new letter is selected. If the new letter is selected, the controller 110 determines in step 506 whether a letter paper of the new letter is included among the letter papers registered in the letter paper list.

If the letter paper of the new letter is not included among the letter papers registered in the letter paper list, the controller 110 notifies the user that the letter paper of the selected new letter is not a downloaded letter paper, and provides a button for allowing the user to preview the selected new letter.

The controller 110 determines in step 507 whether 'Preview' is selected by the user. If 'Preview' is selected by the user, the controller 110 transmits URL information specifying a location where the letter contents may be downloaded, in the new letter information, to the electronic letter application service server 300, and sends a request for only some (for example, only the text) of the letter contents of the new letter to the electronic letter application service server 300. The electronic letter application service server 300 may retrieve the letter contents from the location specified in the URL. Upon receiving the text in the letter contents of the new letter from the electronic letter application service server 300, the controller 110 displays the received text on the default letter paper among the letter papers registered in the letter paper list in step 508.

The controller 110 determines in step 509 whether 'Download' is selected while displaying the received text in the default thumbnail image for the letter paper of the new letter. If 'Download' is selected, the controller 110 transmits URL information specifying a location where the letter paper of the new letter may be downloaded, to the electronic letter paper server 200. In step 510, the controller 110 downloads a letter paper of the new letter from the electronic letter paper server 200 and registers the downloaded letter paper of the new letter in the letter paper list as an available letter paper. The electronic letter paper server 200 may retrieve the new letter paper from the location specified in the URL.

When the new letter information for the letter paper of the new letter has been received from the electronic letter paper server 200, the controller 110 may search for a letter paper corresponding to the letter paper of the new letter among the non-downloaded new letter papers, and transmit URL information specifying a location where the letter paper of the new letter may be downloaded, to the electronic letter paper server 200.

The downloaded new letter paper may need to undergo an installation process after being downloaded, since the new letter paper may be an APK file. When the installation process is completed, the new letter paper is registered in the letter paper list, and may be used to send and receive a letter.

When the download for the letter paper of the received new letter is completed, the controller 110 transmits URL information specifying a location where the letter contents may be downloaded, in the received new letter information, to the electronic letter application service server 300. The controller 110 downloads all letter contents (multimedia data including text, photo, voice file and music file) of the new letter from the electronic letter application service server 300 and, in step 511, displays or outputs the downloaded all letter contents on the letter paper of the new letter.

It is assumed in FIG. 5 that a letter paper of a new letter received in a letter box of the electronic letter application mode is downloaded. However, if a new letter is received in a standby mode while performing another application, the controller 110 may indicate the reception of the new letter with a specific icon in a predetermined area (for example, a display area of an indicator indicating a battery level, a received signal strength, and the like) of the display 160. Accordingly, if the specific icon indicating the reception of the new letter is selected, the controller 110 may switch to the electronic letter application mode and perform steps 506 to 511.

In the example of steps 404 and 504, as illustrated in FIG. 7A, in a letter box of the electronic letter application mode, the controller 110 indicates the presence of a received new letter by displaying an indicator b1 indicating a new letter in a default thumbnail image 701 of a letter paper.

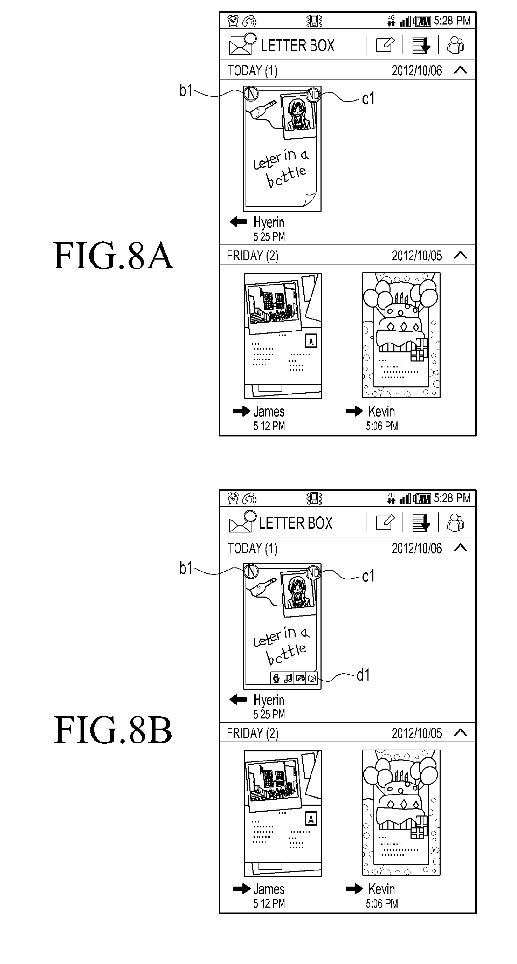

FIGS. 8A and 8B illustrate an operation of displaying a received new letter according to an exemplary embodiment of the present invention.

Also, referring to FIG. 8A, in a letter box of the electronic letter application mode, while displaying an indicator b1 indicating a new letter in a default thumbnail image 801 of a letter paper, the controller 110 may display an indicator c 1 indicating that a letter paper of the new letter is a letter paper that needs to be downloaded as the letter paper of the new letter is not registered in the letter paper list.

The controller 110 may determine whether the letter paper of the new letter is a letter paper that needs to be downloaded by comparing letter paper information (for example, letter paper's name) in the new letter information received from the electronic letter application service server 300 with information about the letter papers registered in the letter paper list.

Referring to FIG. 8B, in a letter box of the electronic letter application mode, the controller 110 may also display, in the default thumbnail image 801 of a letter paper, an indicator b1 indicating a new letter, an indicator c1 indicating that the letter paper of the new letter is a letter paper that needs to be downloaded, and an icon d1 indicating a type of the multimedia included in the letter contents of the new letter.

In this case, the electronic letter application service server 300 transmits, to the terminal 100, new letter information including type information of the multimedia data included in the letter contents, together with the letter paper information (for example, letter paper's name or default thumbnail image), sender information and URL information specifying a location where letter contents may be downloaded.

It will be appreciated that embodiments of the present invention can be realized in the form of hardware, software or a combination of hardware and software. Any such software may be stored in the form of volatile or non-volatile storage. Exemplary embodiments of the present invention may be implemented as computer-readable codes in computer-readable media. The computer-readable media may include all kinds of recording devices storing computer-readable data. Examples of the computer-readable media may include Read Only Memory (ROM), Random Access Memory (RAM), optical disk, magnetic tape, floppy disk, hard disk, non-volatile memory, and the like, and may also be implemented in the form carrier waves (for example, transmission over the Internet). The computer-readable recording media may be distributed to computer systems connected by the network, and computer-readable codes may be stored and executed in a distributed manner. It will be appreciated that the storage devices and storage media are embodiments of machine-readable storage that are suitable for storing a program or programs comprising instructions that, when executed, implement embodiments of the present invention.

As is apparent from the foregoing description, the proposed apparatus and method may provide not only basic letter papers but also new letter papers having a wide variety of topics and objectives in an electronic letter application, thereby meeting both quantitative and qualitative needs of the user. In addition, when the letter paper is managed as an APK file, each letter paper may be applied in a variety of ways, and the high-quality high-capacity letter papers may be provided in a downloadable way, without affecting the capacity of the electronic letter application.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the scope of the invention as defined by the appended claims.

## Claims

1. A terminal for providing an electronic letter paper download service, the terminal comprising:
a controller arranged to register a new letter paper as an available letter paper if a download of the new letter paper is selected and completed, and arranged to display letter contents of a new letter on the new letter paper for the new letter when the download of the new letter paper is completed.

2. The terminal of claim 1, wherein if a letter paper list is selected in an electronic letter application mode, the controller is arranged to determine whether new letter paper information is received from a server, to display the new letter paper as a default thumbnail image including a 'Download' software button if the new letter paper information is received, to download the new letter paper from the server if the 'Download' software button is selected, and to register the new letter paper in the letter paper list as an available letter paper; and
wherein the new letter paper information includes a default thumbnail image of the letter paper, a name of the new letter paper, and Universal Resource Locator, URL, information specifying a location where the new letter paper may be downloaded.

3. The terminal of claim 1 or claim 2, wherein if a letter paper list is selected in an electronic letter application mode, the controller is arranged to determine whether updated letter paper information is received from a server, to display a letter paper needing to be updated among letter papers registered in the letter paper list as a default thumbnail image including an 'Update' software button if the updated letter paper information is received, to receive update information about the letter paper needing to be updated from the server if the 'Update' software button is selected, and to update the letter paper needing to be updated based on the updated letter paper information; and
wherein the updated letter paper information includes a name of the letter paper needing to be updated and URL information specifying a location where the letter paper needing to be updated may be updated.

4. The terminal of any one of the preceding claims, wherein the controller is arranged to display an indicator indicating a new letter in a default thumbnail image for a letter paper of the new letter if new letter information is received from a server when a letter box is selected in an electronic letter application mode; and
wherein the controller is arranged to download the letter paper of the new letter in response to a download request, if the letter paper of the new letter is not registered in a letter paper list when the new letter is selected, to download letter contents of the new letter from the server, and to display the letter contents on the letter paper of the new letter;
wherein when a download of the letter paper of the new letter is completed, the controller is arranged to register the letter paper of the new letter in the letter paper list as an available letter paper; and
wherein the new letter information includes letter paper information, sender information, and URL information specifying a location where the letter contents may be downloaded.

5. The terminal of any one of claims 1 to 3, wherein the controller is arranged to display an indicator indicating a new letter in a default thumbnail image for the letter paper of the new letter, if new letter information is received from a server when a letter box is selected in an electronic letter application mode;
wherein the controller is arranged to download and display only some of the letter contents of the new letter from the server upon a preview request, if the letter paper of the new letter is not registered in a letter paper list when the new letter is selected;
wherein the some of the letter contents of the new letter includes a text of the new letter and
wherein when download for the letter paper of the new letter is completed, the controller registers the letter paper of the new letter in the letter paper list as an available letter paper.

6. The terminal of claim 5, wherein if download for the new letter is selected while displaying only some of the letter contents of the new letter upon the preview request, the controller is arranged to download the letter paper of the new letter, downloads all letter contents of the new letter from the server, and displays the letter contents on the letter paper of the new letter.

7. The terminal of claim 5 or claim 6, wherein the new letter information includes letter paper information, sender information, and URL information specifying a location where the letter contents may be downloaded.

8. The terminal of any one of the preceding claims, wherein if the new letter is received when a letter box is selected in an electronic letter application mode, the controller is arranged to display an indicator indicating the new letter in a default thumbnail image for the letter paper of the new letter, and to display an indicator indicating that the letter paper of the new letter is not registered in a letter paper list.

9. The terminal of any one of claims 1 to 7, wherein if new letter information is received from a server when a letter box is selected in an electronic letter application mode, the controller is arranged to display an indicator indicating the new letter in a default thumbnail image for a letter paper of the new letter and displays an indicator indicating a type of multimedia included in the new letter; and
wherein the new letter information includes letter paper information, sender information, URL information specifying a location where letter contents may be downloaded, and type information of multimedia included in the letter contents.

10. A method for providing an electronic letter paper download service in a terminal, the method comprising:
if download of a new letter paper is selected and completed, registering the new letter paper as an available letter paper; and
displaying letter contents of a new letter on the new letter paper for the new letter if download of the letter paper of the new letter is selected and completed.

11. The method of claim 10, wherein registering the new latter paper comprises:
if a letter paper list is selected in an electronic letter application mode, determining whether new letter paper information is received from a server;
displaying the new letter paper as a default thumbnail image including a 'Download' software button if the new letter paper information is received from the server;
downloading the new letter paper from the server if the 'Download' software button is selected; and
registering the new letter paper in the letter paper list as an available letter paper;
wherein the new letter paper information includes a default thumbnail image of the letter paper, a name of the letter paper, and Universal Resource Locator, URL, information specifying a location where the letter paper may be downloaded.

12. The method of claim 10 or claim 11, further comprising updating the letter paper if an update request for the letter paper is selected while displaying a letter paper needing to be updated as a default image in the 'View Letter Paper' menu.

13. The method of claim 12, wherein updating the letter paper comprises:
if a letter paper list is selected in an electronic letter application mode, determining whether updated letter paper information is received from a server;
displaying a letter paper needing to be updated among letter papers registered in the letter paper list as a default thumbnail image including an 'Update' software button if the updated-letter paper information is received from the server;
receiving update information about the letter paper needing to be updated from the server if the 'Update' software button is selected; and
updating the letter paper needing to be updated according to the updated letter paper information;
wherein the updated letter paper information includes a name of the letter paper needing to be updated and URL information specifying a location where the letter paper needing to be updated may be updated.

14. The method of any one of claims 10 to 13, wherein displaying the letter contents comprises:
determining whether new letter information is received from a server, if a letter box is selected in an electronic letter application mode;
displaying an indicator indicating the new letter in a default thumbnail image for the letter paper of a new letter if new letter information is received from the server;
determining whether the letter paper of the new letter is registered in a letter paper list, if the new letter is selected;
downloading the letter paper of the new letter upon a download request, if the letter paper of the new letter is not registered in the letter paper list when the new letter is selected;
downloading letter contents of the new letter from the server;
displaying the letter contents on the letter paper of the new letter; and
if download for the letter paper of the new letter is completed, registering the letter paper of the new letter in the letter paper list as an available letter paper;
wherein the new letter information includes letter paper information, sender information, and URL information specifying a location where the letter contents may be downloaded.

15. The method of any one of claims 10 to 13, wherein displaying the letter contents comprises:
determining whether new letter information is received from a server, if a letter box is selected in an electronic letter application mode;
displaying an indicator indicating the new letter in a default thumbnail image for the letter paper of the new letter, if the new letter information is received from the server;
determining whether the letter paper of the new letter is registered in a letter paper list, if the new letter is selected; downloading and displaying only some of letter contents of the new letter from the server upon a preview request, if the letter paper of the new letter is not registered in the letter paper list; and
when the downloading of the letter paper of the new letter is completed, registering the letter paper of the new letter in the letter paper list as an available letter paper;
wherein the some of the letter contents of the new letter includes a text.

16. The method of claim 15, further comprising:
if download for the new letter is selected while displaying only some of the letter contents of the new letter upon the preview request, downloading the letter paper of the new letter;
downloading all letter contents of the new letter from the server; and
displaying the letter contents on the letter paper of the new letter.

17. The method of claim 15 or claim 16, wherein the new letter information includes letter paper information, sender information, and URL information specifying a location where the letter contents may be downloaded.

18. The method of any one of claims 10 to 13, wherein displaying the letter contents comprises:
determining whether new letter information is received from a server, if a letter box is selected by a user in an electronic letter application mode;
if the new letter information received is from the server, displaying an indicator indicating the new letter in a default thumbnail image for the letter paper of the new letter, and displaying an indicator indicating that the letter paper of the new letter is not registered in a letter paper list; and
wherein the new letter information includes letter paper information, sender information, URL information specifying a location where the letter contents may be downloaded, and type information of multimedia included in the letter contents.

19. The method of any one of claims 10 to 13, wherein displaying the letter contents comprises:
determining whether new letter information is received from a server, if a letter box is selected by a user in an electronic letter application mode; and
if the new letter information is received from the server, displaying an indicator indicating the new letter in a default thumbnail image for a letter paper of the new letter and displaying an indicator indicating a type of multimedia included in the new letter.
